# FASCICULE DE BREVET EUROPEEN

(11) **EP 1 439 094 B1**
(45) Date de publication et mention de la délivrance du brevet: **13.04.2011**
(21) Numéro de dépôt: 04290150.4
(22) Date de dépôt: 20.01.2004
(51) Int. Cl.: B60R 13/04, B32B 27/08, B60R 13/00

(54) **Pièce externe de véhicule automobile comportant un film décoratif et procédé de fabrication de cette pièce**
Fahrzeug Aussenteil bestehend aus einer Dekorativschicht und Herstellverfahren dieses Teils
Vehicle external piece comprising a decorating film and manufacturing process thereof

(30) Priorité: 20.01.2003 FR 0300577
(43) Date de publication de la demande: 21.07.2004
(73) Titulaire: COMPAGNIE PLASTIC OMNIUM, 69007 Lyon (FR)
(72) Inventeur: Thevenet, Charlotte, 01800 Charnoz (FR); Gille, Denis, 01100 Bellignat (FR); Lacroix, Thibault, 01500 Château-Gaillard (FR)
(74) Mandataire: de la Bigne, Guillaume Michel Marie

(56) Documents cités:
- EP-A- 0 381 856
- WO-A-00/51829
- WO-A-99/65679
- US-A- 5 035 940
- US-A- 6 093 278

## Description

La présente invention concerne une pièce de véhicule automobile comportant un film décoratif et un procédé de fabrication de cette pièce.

On sait que les carrosseries des véhicules automobiles ont un rôle essentiel dans le succès commercial des modèles.

Dans ce contexte, les pièces de carrosserie décorées ont une fonction de plus en plus importante, par l'originalité qu'elles procurent. On connaît par exemple de EP 0381856 un jonc enjoliveur comprenant une couche translucide rugueuse sur laquelle est déposé un revêtement métallique pour donner un aspect mat. On connaît par ailleurs de US 6093278 une pièce comportant une feuille translucide sur laquelle est déposée une couche métallique, l'ensemble étant rapporté sur un support.

En outre, différentes techniques de peinture et de surmoulage de films décoratifs ont déjà été proposées.

La présente invention concerne plus précisément l'utilisation de films décoratifs en remplacement ou en complément des peintures. Ces films sont destinés à décorer des pièces de surface relativement grande par rapport à leur épaisseur et dont la rigidité leur permet de conserver une forme prédéterminée. De telles pièces sont essentiellement constituées par une peau s'étendant suivant deux directions perpendiculaires.

Il est connu que les films utilisés dans cette application doivent présenter des caractéristiques mécaniques très particulières pour résister aux intempéries, aux chocs et aux rayures auxquels sont soumises les pièces de carrosserie.

Ces films parviennent à remplir les cahiers des charges fixés par les constructeurs automobiles mais ont un coût élevé du fait de leur bonne tenue mécanique.

En outre, leurs qualités de résistance nuisent à leur bonne aptitude à s'adapter à des géométries particulières, ce qui limite leurs possibilités d'utilisation.

La présente invention a pour but de proposer une solution à ces problèmes.

A cet effet, l'invention a pour objet une pièce extérieure de véhicule automobile comportant une peau en matière thermoplastique transparente ou translucide s'étendant suivant deux directions perpendiculaires, caractérisée en ce que la peau a une face interne sur laquelle un film décoratif est collé avec un adhésif, l'épaisseur de la peau étant supérieure à celle du film, que la dimension de la peau suivant chacune des deux directions perpendiculaires étant au moins dix fois supérieure à l'épaisseur totale de la peau et du film, et en ce que la pièce est constituée exclusivement de la peau et du film collé avec l'adhésif.

La pièce de véhicule automobile selon l'invention résout le problème susmentionné de tenue aux intempéries, aux chocs et aux rayures du film utilisé pour la décoration de pièces extérieures, étant donné que ce film est mécaniquement protégé par la peau en étant placé derrière elle.

La matière thermoplastique constituant la peau de la pièce ainsi décorée procure également une protection aux ultraviolets si, comme c'est généralement le cas, la matière dont elle est constituée contient des filtres anti-UV.

Selon un mode de réalisation préféré de l'invention, la peau est injectée.

Différents rendus esthétiques peuvent être obtenus grâce à l'invention.

En particulier, la matière thermoplastique peut être colorée ou contenir des particules opaques telles que des paillettes.

De même, différentes combinaisons de zones opaques et de zones transparentes ou translucides peuvent être prévues dans la peau de la pièce selon l'invention. La zone opaque peut être réalisée par marquage, par exemple par peinture, par tampographie, par apposition d'autocollants. Une zone opaque peut également être obtenue en liant une matière opaque à la matière thermoplastique transparente ou translucide, cette liaison étant réalisée par soudure ou par moulage bi-matière.

Conformément à l'invention, on peut également obtenir des rendus esthétiques différents en modifiant l'état de surface de la face interne et ou de la face externe de la peau en matière thermoplastique, laquelle face peut être polie-glace, lisse ou grainée. On entend par polie-glace une surface qui, en plus d'être lisse, présente une bonne qualité optique.

Dans un mode de réalisation particulier de l'invention, l'adhésion du film est réalisée par interposition d'une couche d'un adhésif, cette couche étant par exemple transparente ou translucide. Le caractère translucide peut par exemple provenir de la matière elle-même ou de la coloration d'une matière transparente.

La couche d'adhésif peut être répartie uniformément sur le film ou disposée en des emplacements particuliers.

Conformément à l'invention, différents types de films décoratifs peuvent être utilisés : film multicouche, film coloré dans la masse, film translucide, film comportant un dépôt d'encre par sérigraphie, par héliographie ou par sublimation, film électroluminescent.

La couche d'adhésif peut également être présente sur les deux faces du film.

La peau peut être réalisée dans un matériau choisi parmi l'un au moins des éléments de l'ensemble constitué par du polycarbonate (PC), du polyméthacrylate de méthyle (PMMA), du méthacrylate acrylonitrile butadiène styrène (M-ABS), un polyamide transparent, et un copolymère polypropylène-polyéthylène (P/E).

La pièce selon l'invention peut être choisie parmi l'un au moins des éléments de l'ensemble constitué par un bandeau de pare-chocs, bandeau de hayon, un bandeau de coffre, un bandeau de portière, un bandeau de bouclier de pare-chocs.

L'invention a également pour objet un procédé de fabrication d'une pièce extérieure de véhicule automobile, comportant les étapes suivantes :
- on réalise, par injection de matière thermoplastique transparente ou translucide, une peau s'étendant suivant deux directions perpendiculaires et ayant une face interne ;
- on met en forme un film pour lui donner la même forme que la face interne de la peau, le film ayant une épaisseur inférieure à celle de la peau et l'épaisseur totale de la peau et du film ne dépassant pas un dixième de chacune des longueurs de la peau selon les deux directions perpendiculaires ; et
- on colle le film sur la face interne de la peau avec un adhésif.

Un des avantages de l'invention est que le film peut présenter une moins bonne tenue mécanique que les films habituellement utilisés pour recouvrir les pièces des véhicules automobiles sur leurs faces externes, de sorte que l'on peut recourir à des films plus minces qui non seulement sont meilleur marché , mais surtout présentent une plus grande élasticité et, par conséquent, sont plus à même de s'adapter à une configuration géométrique particulière de la pièce décorée.

L'invention sera mieux comprise à la lecture de la description qui va suivre, donnée uniquement à titre d'exemple et faite en se référant aux dessins annexés dans lesquels :
- la figure 1 est une vue schématique en coupe d'un poinçon utilisé pour former un film décoratif ;
- la figure 2 est une vue analogue à la figure 1 après formage du film ;
- la figure 3 est une vue analogue à la figure 1 après positionnement d'une pièce en matière thermoplastique sur le film ;
- la figure 4 est une vue analogue à la figure 1 après application d'une pression sur la pièce ;
- la figure 5 représente en perspective un bouclier de pare-chocs pouvant recevoir deux bandeaux décorés ;
- la figure 6 est une vue en coupe selon VI-VI d'un des bandeaux de la figure 5;
- la figure 7 est une vue analogue à la figure 5 une fois les bandeaux positionnés sur le bouclier ;
- la figure 8 est une vue analogue à la figure 5 montrant une variante de réalisation.

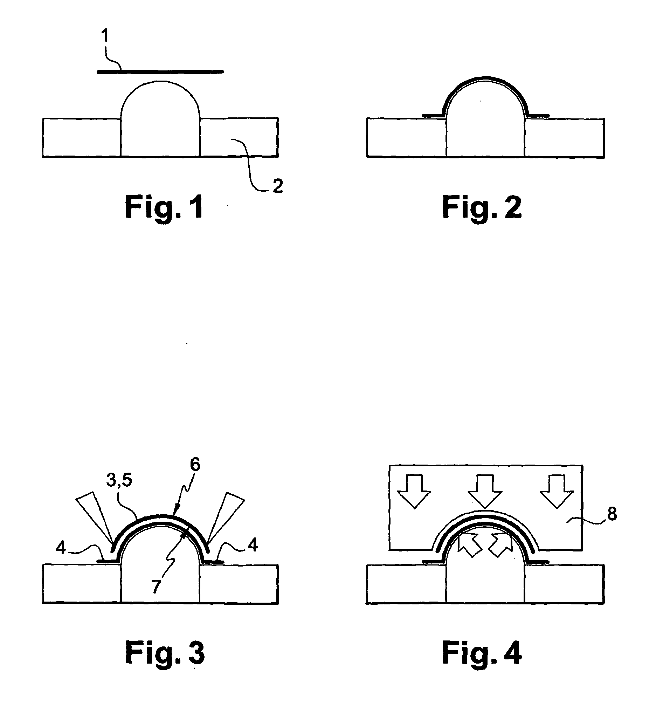

Le film 1 représenté sur la figure 1 peut par exemple, présenter l'une des compositions suivantes :
- composition n° 1 dans laquelle le film est constitué de la succession de couches suivantes :
   - une couche de base, translucide ou opaque. Translucide, elle offre la possibilité de laisser passer une source lumineuse placée derrière le film. Opaque, elle permet de donner un aspect de profondeur tout en masquant des sources de lumière parasites ;
   - une couche d'un adhésif transparent ou translucide apte à résister à la température de formage du film et d'utilisation de la pièce décorée et à l'élongation du film lors de son formage, par exemple un adhésif du même type que celui vendu par la marque 3M, sous la référence F777 ;
   - une feuille de protection, rapportée sur la couche d'adhésif, en polyéthylène, en polypropylène, ou en polyuréthanne, traitée de façon à n'adhérer que faiblement à la couche d'adhésif. Cette feuille est maintenue lors du formage du film, puis retirée pour l'utilisation finale de la pièce.
- composition n° 2 dans laquelle le film est constitué de la succession de couches suivantes :
   - une couche de base comme dans la composition n°1 ;
   - une couche d'encre représentant un motif monochrome ou multi-couleurs, continue ou discontinue, les encres utilisées pouvant être opaques ou transparentes ;
   - une couche d'adhésifs selon la composition n° 1 ;
   - une feuille de protection selon la composition n° 1.
- composition n° 3 dans laquelle le film est constitué de la succession de couches suivantes :
   - une couche de base selon la composition n°1 ;
   - une couche intermédiaire translucide continue qui permet d'augmenter l'aspect de profondeur par ajout d'une décoration. Cette couche peut être teintée ;
   - une couche d'adhésif selon la composition n° 1 ;
   - une feuille de protection selon la composition n° 1.
- variante de la composition n° 3 dans laquelle le film est constitué de la succession de couches suivantes :
   - une couche de base selon la composition n° 1 ;
   - une couche intermédiaire translucide discontinue qui réalise des opacités relatives locales, c'est-à-dire qui, par des niveaux de luminure différents, réduit localement le passage de la lumière ;
   - une couche d'adhésif selon la composition n° 1 ;
   - une feuille de protection selon la composition n° 1.
- composition n° 4 dans laquelle le film est constitué de la succession de couches suivantes :
   - une feuille de protection externe ;
   - une couche de base selon la composition n° 1, dont les propriétés d'épaisseur et de brillant sont préservées lors du formage du film grâce à la feuille de protection externe ;
   - éventuellement une couche intermédiaire translucide continue selon la composition n° 3 ou discontinue selon la variante de la composition n° 3 ;
   - une couche d'adhésif selon la composition n° 1 ;
   - une feuille de protection selon la composition n° 1.
- variante de la composition n° 4 dans laquelle le film est constitué de la succession de couches suivantes :
   - une feuille de protection externe selon la composition n° 4 ;
   - une couche de base selon la composition n° 1 ;
   - une couche d'encre selon la composition n° 3 ;
   - une couche d'adhésif selon la composition n° 1 ;
   - une feuille de protection selon la composition n° 1.

D'autres compositions de film peuvent également être envisagées.

Ce film 1 est mis en forme sur un poinçon 2 par emboutissage à froid ou par thermoformage.

Une fois le film 1 mis en forme, comme représenté sur la figure 2, on le maintient sur le poinçon 2 et on vient positionner par-dessus une pièce 3 de matière thermoplastique, puis on découpe la périphérie 4 du film dépassant de la pièce 3.

L'opération de découpe peut aussi être réalisée avant le positionnement de la pièce.

Le cas échéant, la feuille de protection de la couche d'adhésif tournée vers la face interne de la pièce 3 est préalablement retirée.

La pièce 3 peut être réalisée en polycarbonate (PC), polyméthacrylate de méthyle (PMMA), méthacrylate acrylonitrile butadiène styrène (M-ABS), polyamide transparent, ou copolymère polypropylène-polyéthylène (P/E). La peau 3 est réalisée par injection, de façon classique.

Dans l'exemple décrit, la pièce 3 est intégralement constituée d'une peau 5 comportant une face externe 6 et une face interne 7, la face externe 6 étant polie-glace tandis que la face interne 7 comporte un grain de 2 mm de profondeur.

On applique ensuite une pression à l'aide d'une matrice 8 qui vient recouvrir la pièce afin d'éviter l'emprisonnement d'air et assurer le bon remplissage du grain de la face interne de la pièce.

On obtient ainsi une pièce décorée présentant un aspect de profondeur mais dont la décoration n'est pas exposée aux agressions extérieures.

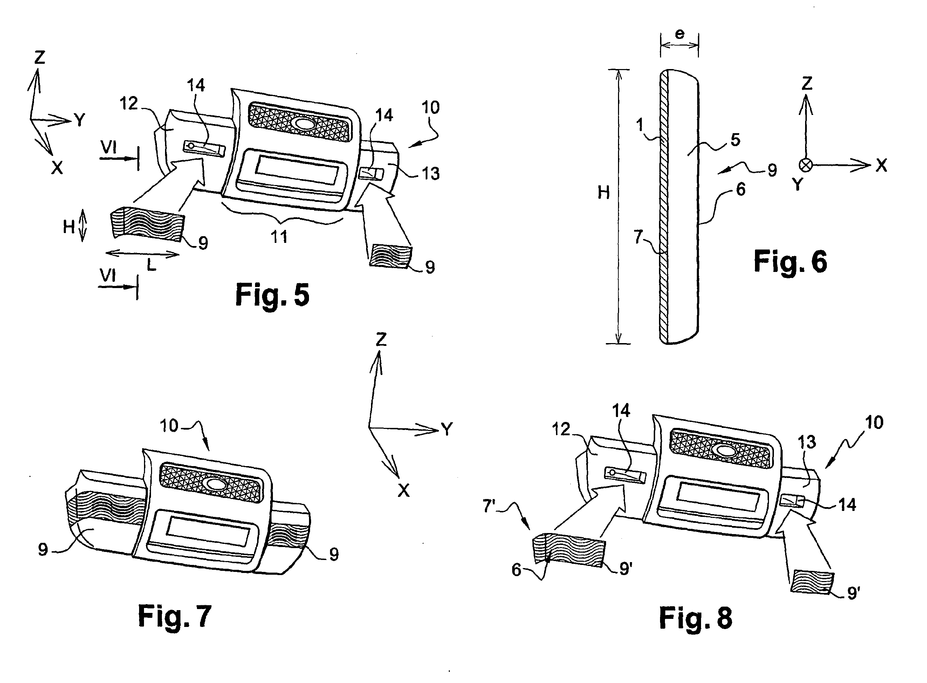

Une telle pièce peut par exemple être un bandeau 9 d'un bouclier 10 de pare-chocs, tel que celui représenté sur la figure 5. Ce bandeau 9 s'étend suivant deux directions perpendiculaires Y et Z.

Selon d'autres modes de réalisation non représentés, la pièce décorée est un bandeau de pare-chocs, un bandeau de coffre, ou de portière. Cette pièce peut avoir une fonction purement décorative ou une autre fonction de protection aux chocs.

Comme on peut le voir sur la figure 6, l'épaisseur du film 1 est inférieure à l'épaisseur de la peau 5. En outre, l'épaisseur e du bandeau 9, constitué par la peau 5 et le film 1, est relativement faible devant les dimensions de la peau 5 suivant les directions Y et Z.

Par dimensions de la peau 5, on entend des dimensions permettant de donner un ordre de grandeur de la taille de la peau suivant deux directions perpendiculaires, par exemple la longueur et la largeur de la peau si la forme de la peau est proche de celle d'un rectangle. Pour une peau ayant la forme d'un disque, les dimensions suivant deux directions perpendiculaires seraient deux diamètres du disque.

Les dimensions du bandeau 9 sont sa hauteur H et sa longueur développée L. La hauteur H est égale à environ 70 mm, et la longueur L à environ 300 mm.

La peau 5 a une épaisseur de 3 mm, et le film décoratif comportant l'adhésif a une épaisseur proche de 1mm. Par conséquent, l'épaisseur e du bandeau 9 est sensiblement de 4mm.

Ainsi, dans cet exemple, l'épaisseur de la pièce est presque 20 fois inférieure à sa hauteur, et 75 fois inférieure à sa longueur.

Pour un bandeau de portière, non représenté, l'épaisseur de la pièce serait à peu près la même que celle du bandeau 9, la hauteur pourrait être de 60 mm, et la longueur de 1000 mm.

Le bouclier 10 comprend une partie centrale 11 constituant une calandre et une plaque de police et deux parties latérales 12, 13 dans chacune desquelles est ménagé une ouverture 14 pour un feu de signalisation.

Chaque partie latérale 12, 13 est destinée à recevoir un bandeau 9, dont le détail est fourni par la vue en coupe de la figure 6.

Sur cette figure, on voit que le bandeau 9 est intégralement constitué par une peau transparente 5, comprenant une face interne 7 et une face externe 6.

La face externe 6 est polie-glace tandis que la face interne 7 est grainée ou gravée et présente un motif en relief formé de vagues 15. Le qualificatif "gravée" signifie ici que la face comporte des reliefs et des creux très marqués.

Dans une région centrale rectangulaire 16 du bandeau 9, la face interne est toutefois polie-glace, entre les vagues 15.

Le film adhésif est collé sur la face interne 7 de la peau transparente 5.

L'aptitude du bandeau à laisser passer la lumière est meilleure au droit de la région centrale rectangulaire 16 du bandeau.

Cette région centrale rectangulaire 16 coïncide avec l'ouverture 14 ménagée dans la partie latérale 12, 13 du bouclier lorsque le bandeau 9 est mis en place sur le bouclier, comme représenté sur la figure 7.

Dans la variante de la figure 8, où les mêmes références indiquent les mêmes parties du bouclier, la face interne 7' de la peau présente partout le même grainage. Aucune différence de luminosité ne permet de localiser le feu de signalisation à travers le bandeau 9' tant que la source lumineuse du feu n'est pas allumée.

## Revendications

1. Pièce extérieure de véhicule automobile comportant une peau (5) en matière thermoplastique transparente ou translucide s'étendant suivant deux directions perpendiculaires (Y, Z), **caractérisée en ce que** la peau a une face interne (7, 7') sur laquelle un film décoratif (1) est collé avec un adhésif, l'épaisseur de la peau (5) étant supérieure à celle du film (1), la dimension (H, L) de la peau suivant chacune des deux directions perpendiculaires (Y, Z) étant au moins dix fois supérieure à l'épaisseur (e) totale de la peau (5) et du film (1) et **en ce que** la pièce est constituée exclusivement de la peau et du film collé avec l'adhésif.

2. Pièce selon la revendication 1 dans laquelle la peau (5) est injectée.

3. Pièce selon l'une quelconque des revendications 1 et 2, dans laquelle la matière thermoplastique est colorée.

4. Pièce selon l'une quelconque des revendications 1 à 3, dans laquelle la matière thermoplastique contient des particules opaques telles que des paillettes.

5. Pièce selon l'une quelconque des revendications 1 à 4, dans laquelle la peau (5) comporte une ou plusieurs zones opaques.

6. Pièce selon la revendication 5 dans laquelle une zone opaque est réalisée par marquage par exemple par peinture, tampographie ou par apposition d'un autocollant.

7. Pièce selon l'une quelconque des revendications 5 et 6 dans laquelle une zone opaque est constituée de matière opaque liée à la matière thermoplastique transparente ou translucide constituant la peau, par exemple par soudure, par moulage des matières.

8. Pièce selon l'une quelconque des revendications 1 à 7, dans laquelle la surface de la face interne (7, 7') est au moins localement polie-glace ou lisse.

9. Pièce selon l'une quelconque des revendications 1 à 8, dans laquelle la surface de la face interne (7, 7') est au moins localement grainée.

10. Pièce selon l'une quelconque des revendications 1 à 9, dans laquelle la peau comporte, opposée à la face interne, une face externe (6) au moins localement polie-glace, lisse ou grainée.

11. Pièce selon l'une quelconque des revendications 1 à 10, dans laquelle le l'adhésion du film est réalisée par une couche d'adhésif appartenant au film.

12. Pièce selon la revendication 11, dans laquelle la couche d'adhésif est transparente.

13. Pièce selon la revendication 11, dans laquelle la couche d'adhésif est translucide, par exemple du fait de sa manière ou de sa coloration.

14. Pièce selon l'une quelconque des revendications 11 à 13, dans laquelle la couche d'adhésif est répartie uniformément sur le film.

15. Pièce selon l'une quelconque des revendications 1 à 14, dans laquelle le film décoratif est un film multicouche.

16. Pièce selon l'une quelconque des revendications 1 à 15, dans laquelle le film décoratif est coloré dans la masse.

17. Pièce selon l'une quelconque des revendications 1 à 16, dans laquelle le film décoratif est translucide.

18. Pièce selon l'une quelconque des revendications 1 à 17, dans laquelle le film comporte un dépôt d'encre, appliqué par sérigraphie, par héliographie ou par sublimation.

19. Pièce selon l'une quelconque des revendications 1 à 18, dans laquelle le film décoratif est électroluminescent.

20. Pièce selon l'une quelconque des revendications 1 à 19, dans laquelle le film décoratif comporte une couche d'adhésif sur ses deux faces.

21. Pièce selon l'une quelconque des revendications 1 à 20, dans laquelle le film présente une certaine élasticité.

22. Pièce selon l'une quelconque des revendications 1 à 21, dans laquelle la peau (5) est réalisée dans un matériau choisi parmi l'un au moins des éléments de l'ensemble constitué par du polycarbonate, du polyméthacrylate de méthyle, du méthacrylate acrylonitrile butadiène styrène, un polyamide transparent, et un copolymère polypropylène-polyéthylène.

23. Pièce selon l'une quelconque des revendications 1 à 22, choisie parmi l'un au moins des éléments de l'ensemble constitué par un bandeau de pare-chocs, bandeau de hayon, un bandeau de coffre, un bandeau de portière, un bandeau d'aile, un bandeau de bouclier de pare-chocs.

24. Procédé de fabrication d'une pièce (9) extérieure de véhicule automobile selon l'une des revendications 1 à 23, comportant les étapes suivantes :
- on réalise, par injection de matière thermoplastique transparente ou translucide, une peau (5) s'étendant suivant deux directions perpendiculaires (Y, Z) et ayant une face interne (7, 7') ;
- on met en forme un film (1) pour lui donner la même forme que la face interne (7, 7') de la peau (5), le film (1) ayant une épaisseur inférieure à celle de la peau (5) et l'épaisseur totale (e) de la peau (5) et du film (1) ne dépassant pas un dixième de chacune des longueurs (H, L) de la peau (5) selon les deux directions perpendiculaires (Y, Z) ;
- on colle le film (1) sur la face interne de la peau (5) avec un adhésif.

## Claims

1. An external part of a motor vehicle, the part comprising a skin (5) of transparent or translucent thermoplastic material extending in two perpendicular directions (Y, Z), the part being **characterized in that** the skin has an internal face (7, 7') to which a decorative film (1) is stuck by means of an adhesive, the thickness of the skin (5) being greater than the thickness of the film (1), the dimension (H, L) of the skin in each of the two perpendicular directions (Y, Z) being at least ten times greater than the total thickness (e) of the skin (5) plus the film (1), and **in that** the part is constituted exclusively by the skin and the film stuck thereto with adhesive.

2. A part according to claim 1, wherein the skin (5) is injection-molded.

3. A part according to claim 1 or claim 2, wherein the thermoplastic material is colored.

4. A part according to any one of claims 1 to 3, wherein the thermoplastic material contains opaque particles such as flakes.

5. A part according to any one of claims 1 to 4, wherein the skin (5) includes one or more opaque zones.

6. A part according to claim 5, wherein an opaque zone is made by marking, e.g. by using paint, by pad printing, or by applying a sticker.

7. A part according to either one of claims 5 and 6, wherein an opaque zone is constituted by opaque material connected to the transparent or translucent thermoplastic material constituting the skin, e.g. by welding, or by molding materials.

8. A part according to any one of claims 1 to 7, wherein the surface of the internal face (7, 7') is mirror-polished or smooth, at least locally.

9. A part according to any one of claims 1 to 8, wherein the surface of the internal face (7, 7') is grained, at least locally.

10. A part according to any one of claims 1 to 9, wherein the skin includes an external face (6) that is opposite from its internal face and that is mirror-polished, smooth, or grained, at least locally.

11. A part according to any one of claims 1 to 10, wherein the adhesion of the film is provided by a layer of adhesive forming part of the film.

12. A part according to claim 11, wherein the adhesive layer is transparent.

13. A part according to claim 11, wherein the adhesive layer is translucent, e.g. as a result of its material or of its being colored.

14. A part according to any one of claims 11 to 13, wherein the adhesive layer is spread uniformly over the film.

15. A part according to any one of claims 1 to 14, wherein the decorative film is a multilayer film.

16. A part according to any one of claims 1 to 15, wherein the decorative film is self-colored.

17. A part according to any one of claims 1 to 16, wherein the decorative film is translucent.

18. A part according to any one of claims 1 to 17, wherein the film includes a deposit of ink applied by silkscreen printing, by dyeline printing, or by sublimation.

19. A part according to any one of claims 1 to 18, wherein the decorative film is electroluminescent.

20. A part according to any one of claims 1 to 19, wherein the decorative film includes an adhesive layer on both faces.

21. A part according to any one of claims 1 to 20, wherein the film presents a certain amount of elasticity.

22. A part according to any one of claims 1 to 21, wherein the skin (5) is made of a material selected from at least one of the items of the set constituted by: polycarbonate, polymethyl methacrylate, acrylonitrile butadiene styrene methacrylate, a transparent polyamide, and a polypropylene-polyethylene copolymer.

23. A part according to any one of claims 1 to 22, selected from at least one of the items of the set constituted by a capping strip for: a bumper, a tailgate, a trunk, a door, a fender, a bumper shield.

24. A method of fabricating an external part (9) of a motor vehicle according to any one of claims 1 to 23, the method comprising the following steps:
· using injection-molding of transparent or translucent thermoplastic material to make a skin (5) extending in two perpendicular directions (Y, Z) and having an inside face (7, 7');
· shaping a film (1) so that it has the same shape as the inside face (7, 7') of the skin (5), the film (1) having thickness that is less than the thickness of the skin (5) and the total thickness (e) of the skin (5) plus the film (1) not exceeding one-tenth of either of the lengths (H, L) of the skin (5) in the two perpendicular directions (Y, Z); and
· sticking the film (1) to the inside face of the skin (5) with an adhesive.

## Patentansprüche

1. Fahrzeugaußenteil, das eine Schicht (5) aus durchsichtigem oder durchscheinendem Thermoplastmaterial aufweist, die sich entlang zweier zueinander senkrechter Richtungen (Y, Z) erstreckt, **dadurch gekennzeichnet, dass** die Schicht eine Innenseite (7, 7') hat, auf der eine Dekorfolie (1) mit einem Klebstoff aufgeklebt ist, wobei die Dicke der Schicht (5) größer ist als die der Folie (1), wobei die Abmessung (H, L) der Schicht entlang jeder der zwei zueinander senkrechten Richtungen (Y, Z) mindestens zehn Mal größer ist als die Gesamtdicke (e) der Schicht (5) und der Folie (1), und dass das Teil ausschließlich aus der Schicht und der mit dem Klebstoff angeklebten Folie besteht.

2. Teil nach Anspruch 1, bei dem die Schicht (5) gespritzt ist.

3. Teil nach einem der Ansprüche 1 und 2, bei dem das Thermoplastmaterial farbig ist.

4. Teil nach einem der Ansprüche 1 bis 3, bei dem das Thermoplastmaterial undurchsichtige Partikel, wie zum Beispiel Pailletten enthält.

5. Teil nach einem der Ansprüche 1 bis 4, bei dem die Schicht (5) einen oder mehrere undurchsichtige Bereiche aufweist.

6. Teil nach Anspruch 5, bei dem ein undurchsichtiger Bereich durch Markieren zum Beispiel mit Anstrich, Tampografie oder durch Aufbringen eines Aufklebers hergestellt ist.

7. Teil nach einem der Ansprüche 5 und 6, bei dem ein undurchsichtiger Bereich aus einem undurchsichtigen Material besteht, das mit dem durchsichtigen oder durchscheinenden Thermoplastmaterial, das die Schicht bildet, zum Beispiel durch Schweißen, durch Formen der Materialien verbunden ist.

8. Teil nach einem der Ansprüche 1 bis 7, bei dem die Oberfläche der Innenseite (7, 7') mindestens stellenweise spiegelpoliert oder glatt ist.

9. Teil nach einem der Ansprüche 1 bis 8, bei dem die Oberfläche der Innenseite (7, 7') mindestens stellenweise körnig ist.

10. Teil nach einem der Ansprüche 1 bis 9, bei dem die Schicht der Innenseite entgegen gesetzt eine Außenseite (6) aufweist, die mindestens stellenweise spiegelpoliert, glatt oder körnig ist.

11. Teil nach einem der Ansprüche 1 bis 10, bei dem das Ankleben der Folie durch eine Klebstoffschicht, die zu der Folie gehört, ausgeführt ist.

12. Teil nach Anspruch 11, bei dem die Klebstoffschicht durchsichtig ist.

13. Teil nach Anspruch 11, bei dem die Klebstoffschicht durchscheinend ist, zum Beispiel auf Grund ihrer Beschaffenheit oder ihrer Färbung.

14. Teil nach einem der Ansprüche 11 bis 13, bei dem die Klebstoffschicht gleichförmig auf der Folie verteilt ist.

15. Teil nach einem der Ansprüche 1 bis 14, bei dem die Dekorfolie eine mehrschichtige Folie ist.

16. Teil nach einem der Ansprüche 1 bis 15, bei dem die Dekorfolie in der Masse gefärbt ist.

17. Teil nach einem der Ansprüche 1 bis 16, bei dem die Dekorfolie durchscheinend ist.

18. Teil nach einem der Ansprüche 1 bis 17, bei dem die Folie eine Ablagerung aus Tinte aufweist, die durch Serigrafie, Lichtpausen oder Sublimation aufgebracht ist.

19. Teil nach einem der Ansprüche 1 bis 18, bei dem die Dekorfolie elektrolumineszierend ist.

20. Teil nach einem der Ansprüche 1 bis 19, bei dem die Dekorfolie eine Klebstoffschicht auf ihren zwei Seiten aufweist.

21. Teil nach einem der Ansprüche 1 bis 20, bei dem die Folie eine bestimmte Elastizität aufweist.

22. Teil nach einem der Ansprüche 1 bis 21, bei dem die Schicht (5) aus einem Werkstoff hergestellt ist, der aus mindestens einem der Elemente der Gruppe ausgewählt ist, die aus Polycarbonat, Methyl-Polymethacrylat, Styrol-Butadien-Acrylnitrilmethacrylat, einem durchsichtigen Polyamid und einem Polyethylen-Polypropylen-Copolymer besteht.

23. Teil nach einem der Ansprüche 1 bis 22, das aus mindestens einem der Elemente der Gruppe ausgewählt ist, die aus einem Stoßfängerband, Heckklappenband, Kofferraumband, Türband, Kotflügelband, Stoßfängerschildband besteht.

24. Verfahren zum Herstellen eines Außenteils (9) eines Kraftfahrzeugs nach einem der Ansprüche 1 bis 23, das die folgenden Schritte aufweist:
- Herstellen durch Spritzen von durchsichtigem oder durchscheinendem Thermoplastmaterial einer Schicht (5), die sich entlang zweier zueinander senkrechter Richtungen (Y, Z) erstreckt und eine Innenseite (7, 7') aufweist;
- Formen einer Folie (1), um ihr die gleiche Form wie die Innenseite (7, 7') der Schicht (5) zu verleihen, wobei die Folie (1) eine Dicke hat, die kleiner ist als die der Schicht (5) und wobei die Gesamtdicke (e) der Schicht (5) und der Folie (1) ein Zehntel jeder der Längen (H, L) der Schicht (5) entlang den zwei zueinander senkrechten Richtungen (Y, Z) nicht überschreitet;
- Ankleben der Folie (1) mit einem Klebstoff auf die Innenseite der Schicht (5).
